# EUROPEAN PATENT SPECIFICATION

(11) **EP 1 553 645 B1**
(45) Date of publication and mention of the grant of the patent: **27.03.2019**
(21) Application number: 03707039.8
(22) Date of filing: 25.02.2003
(51) Int. Cl.: C01G 51/00, C01G 53/00, H01M 4/02, H01M 4/48, H01M 4/58, H01M 4/505, H01M 4/525, C01G 45/12, H01M 4/131, H01M 4/36, H01M 4/485, H01M 10/052

(54) **METHOD FOR PRODUCING POSITIVE PLATE MATERIAL FOR LITHIUM SECONDARY CELL**
VERFAHREN ZUR HERSTELLUNG EINES POSITIV-PLATTENMATERIALS FÜR EINE LITHIUM-SEKUNDÄRZELLE
PROCEDE DE PRODUCTION DE MATERIAU DE PLAQUE D'ANODE POUR ACCUMULATEUR AU LITHIUM

(30) Priority: 23.07.2002 JP 2002214450
(43) Date of publication of application: 13.07.2005
(73) Proprietor: Nikko Materials Co., Ltd., Tokyo 105-8407 (JP)
(72) Inventor: KAJIYA, Yoshio, c/o Petoca Materials Ltd, Kashima-gun, Ibaraki 314-0198 (JP); TASAKI, Hiroshi, c/o Petoca Materials Ltd, Kashima-gun, Ibaraki 314-0198 (JP)
(74) Representative: Goddar, Heinz J.
(86) International application number: PCT/JP2003/002027
(87) International publication number: WO 2004/010519

(56) References cited:
- EP-A- 1 136 446
- EP-A- 1 587 156
- EP-A1- 0 997 956
- WO-A-00/30977
- WO-A-03/009407
- JP-A- 10 134 811
- JP-A- 11 001 323
- JP-A- 2001 202 959
- JP-A- 2001 256 975
- JP-A- 2001 328 818
- US-A1- 2005 130 042

## Description

### TECHNICAL FIELD

The invention relates to a method of producing a cathode material for a lithium secondary cell, capable of contributing to enhancement in cell performances such as initial capacity, cycle characteristics, and safety at high temperature.

### BACKGROUND TECHNOLOGY

There has lately been seen further step-up in degree of overheating in the race for development of a lithium secondary cell, which is regarded as a cell having excellent property in respect of energy density while exhibiting a high discharge voltage.

The lithium secondary cell is comprised of three basic elements, namely, a cathode, an anode, and a separator retaining an electrolyte, interposed between the cathode, and the anode.

For the cathode and the anode, among those elements, use is made of "a slurry prepared by mixing, and dispersing an active material, an electroconductive material, a binding agent, and a plasticizer, where necessary, into a dispersion medium", applied to a current collector, such as a metal foil, metal mesh, and so forth.

As active substance applied to the cathode among those elements, there have been known a lithium-cobalt oxide complex (LiₓCoO₂ : 0 ≤ x ≤ 1), a lithium-manganese oxide complex (LiₓMn₂O₄ :1.0 ≤ x ≤ 1.2) and so forth.

Meanwhile, for active substance applied to the anode, use is generally made of a lithium foil, and material capable of occluding / evolving lithium ions (a carbon material such as, for example, a coke base carbon, and graphite base carbon).

For the electroconductive material, use is made of material having electron conductivity (for example, natural graphite, carbon black, acetylene black, and so forth) and for the binding agent, use is generally made of a fluororesin such as polytetrafluoroethylene (PTFE), poly(vinylidene fluoride) (PVDF), hexafluoropropylene (HFP), and so forth, and a copolymer thereof.

For the dispersion medium, use is made of an organic solvent capable of dissolving the binding agent, such as, for example, acetone, methyl ethyl ketone (MEK), tetrahydrofuran (THF), dimethyl formamide, dimethyl acetamide, tetra methyl urea, trimethyl phosphate, N-methyl-2-pyrrolidone (NMP), and so forth.

As the plasticizer to be added as necessary, an organic solvent that can be replaced with the electrolyte after a film is formed by applying the slurry to the current collector is suitable, and diester phthalate is preferably used.

Then, for the current collector to which the slurry is applied, use is generally made of a copper foil or an aluminum foil.

Further, the slurry necessary for application to the current collector is adjusted by kneading and mixing the above-described active material, electroconductive material, binding agent, dispersion medium, and plasticizer at a predetermined mixing ratio, and various application methods such as gravure coating, blade coating, comma coating, dip coating, and so forth can be adopted for application of the slurry to the current collector.

As the electrolyte to be retained by the separator, there has been known a liquid base electrolyte, a polymer base electrolyte, or a solid base electrolyte, however, the liquid base electrolyte composed of a solvent and a lithium salt dissolvable in the solvent is in widespread use. An organic solvent selected from the group consisting of polyethylene carbonate, ethylene carbonate, dimethyl sulfoxide, butyrolactone, sulfolane, 1,2 - dimethoxyethane, tetrahydrofuran, diethyl carbonate, methyl ethyl carbonate, dimethyl carbonate, and so forth is regarded suitable for use as the solvent in this case, and any selected from the group consisting of LiCF₃SO₃, LiClO₄, LiBF₄, LiPF₆, and so forth is regarded preferable as the lithium salt.

Incidentally, the lithium-manganese oxide complex, lithium-cobalt oxide complex, and so forth, for use as the active material of the lithium secondary cell, are generally synthesized by mixing a compound (manganese oxide, cobalt oxide, and so forth), serving as the major component of a cathode material for a lithium secondary cell, with a lithium compound ((lithium carbonate, and so on) at a predetermined mixing ratio before heat treatment is applied thereto.

Further, in order to cope with requirements for enhancement in cell performance, it has recently been in practice to dope the cathode material for the lithium secondary cell, such as the lithium-manganese oxide complex, lithium-cobalt oxide complex, and so forth, with a small amount of other element (to be added to the former), in which case the cathode material for the lithium secondary cell is synthesized by mixing the compound (manganese oxide, cobalt oxide, and so forth), serving as the major component of the cathode material for the lithium secondary cell, the lithium compound ((lithium carbonate, and so on), and a compound (cobalt oxide, manganese carbonate, and so forth) of a dopant element, at a predetermined mixing ratio, thereby preparing a mixture, and by applying heat treatment to the mixture.

However, because the requirements for enhancement in cell performance of the lithium secondary cell have since become increasingly severer, and in particular, a desire for further improvement in cell performance such as "initial capacity", "cycle characteristics", and further, "safety" not to allow the characteristics thereof to be impaired even at a high temperature has become stronger, a race in research for attainment of the above-described performance as required from the viewpoint of the cathode material has come to be intensified.

Under the circumstances, it is an object of the invention to provide a cathode material for a lithium secondary cell, capable of stably exhibiting further excellent cell performance in respect of initial cell capacity, cycle characteristics, and safety.

JP 2001256975, JP 11001323 A, JP 10134811 A and WO 00/30977 A and WO 00/30977 A disclose a method of producing a cathode material for a lithium secondary cell comprising the steps of a) preparing an alkaline solution, comprising an oxide of a metal suspended therein; b) dripping an aqueous solution of a salt of a second element into the solution; c) precipitating a compound of the second element on the surface of the compound of the metal; d) mixing the compound obtained in c) with a lithium compound; and e) firing the mixture.

EP 0 997 956 A1 discloses a method of producing a cathode material for a lithium secondary cell, comprising the steps of coating a lithium manganese oxide with cobalt.

### DISCLOSURE OF THE INVENTION

To that end, the inventor, et al, have continued extensive studies, and as a result, have succeeded in obtaining the following knowledge. That is, when doping a cathode material for a lithium secondary cell, such as a lithium-manganese oxide complex, lithium-cobalt oxide complex, and so forth with dopant element in order to improve the performance of the cell, if a doping method is adopted whereby a compound of a dopant element is first precipitated and bonded on the surface of "a compound of a metal, as the major component of a cathode material for a lithium secondary cell, in powdery form, by use of a chemical method, and subsequently, "the compound of the metal, as the major component of the cathode material for the lithium secondary cell", after treated as above, is mixed with a lithium compound, such as lithium carbonate, and so forth, to be subsequently fired, instead of using a conventional method of mixing fine powders of the compound of the dopant element, such as cobalt oxide, manganese carbonate, and so forth, with powders of "the compound of the metal, as the major component of the cathode material for the lithium secondary cell", such as manganese oxide, cobalt oxide, and so forth, thereby firing a mixture, it becomes possible to stably obtain a cathode material for implementing a lithium secondary cell exhibiting excellent initial capacity, cycle characteristics, and safety.

The invention has been developed based on the above-described items of the knowledge, and so forth, providing a method of producing a cathode material for a lithium secondary cell, as shown under the following items 1 through 7:
(1) A method of producing a cathode material for a lithium secondary cell, comprising the steps of preparing a solution selected from the group consisting of an alkaline solution, a carbonate solution, and a hydrogencarbonate solution, with a compound of a metal selected from a metal carbonate, a metal hydroxide and a metal oxide, as the major component of a cathode material for a lithium secondary cell, suspended therein, dripping an aqueous solution of a salt of a dopant element into the solution, precipitating a compound of the dopant element on the surface of the compound of the metal, as the major component, subsequently preparing a mixture by mixing the compound of the metal, as the major component, with the compound of the dopant element, precipitated and bonded thereon, with a lithium compound, and firing the mixture.
(2) A method of producing a cathode material for a lithium secondary cell as in the item 1 above, wherein the metal in the compound of the metal, as the major component, is an element selected from the group consisting of elements Co, Mn, and Ni.
(3) A method of producing a cathode material for a lithium secondary cell as in the item 1 or 2 above, wherein the dopant element is at least one element selected from the group consisting of transition metals (Sc, Ti, V, Cr, Mn, Fe, Co, Ni, and Cu), alkaline metals (Li, Na, K, Rb, Cs, and Fr), alkaline earth metals (Be, Mg, Ca, Sr, Ba, and Ra), B, and Al.
(4) A method of producing a cathode material for a lithium secondary cell as in any of the items 1 to 3 above, wherein a ratio of the metal in the compound of the metal, as the major component, to the dopant element is in a range of 99 : 1 to 40 : 60 in terms of a mole ratio.
(5) A method of producing a cathode material for a lithium secondary cell as in the item 1 or 4 above, wherein the metal in the compound of the metal, as the major component, is an element Mn, and the dopant element is at least one element selected from the group consisting of Co, Ni, Al, Mg, and Ti).
(6) A method of producing a cathode material for a lithium secondary cell as in the item 1 or 4 above, wherein the metal in the compound of the metal, as the major component, is an element Co, and the dopant element is at least one element selected from the group consisting of Mn, Ni, Al, Mg, and Ti).
(7) A method of producing a cathode material for a lithium secondary cell as in the item 1 or 4 above, wherein the metal in the compound of the metal, as the major component, is an element Ni, and the dopant element is at least one element selected from the group consisting of Co, Mn, Al, Mg, and Ti).

### BEST MODE FOR CARRYING OUT THE INVENTION

As "a compound of a metal, as the major component of a cathode material for a lithium secondary cell", there is cited metal carbonate, and a metal hydroxide, besides a metal oxide such as, for example, a cobalt oxide as the major component of a lithium-cobalt oxide complex based cathode material for a lithium secondary cell, manganese oxide as the major component of a lithium-manganese oxide complex based cathode material for a lithium secondary cell, and nickel oxide as the major component of a lithium-nickel oxide complex based cathode material for a lithium secondary cell. Further, use may be made of a hydroxide and an oxide, produced by the coprecipitation method.

In this connection, as the manganese oxide described, manganese oxide under 10 µm in average grain size, obtained by applying oxidation treatment to "manganese carbonate produced by blowing carbon dioxide into aqueous ammonia of metallic manganese", as disclosed in, for example, JP - A 2000 - 281351, which is in Japanese Unexamined Patent Publication, can be suitable for use.

As an alkaline solution in which "the compound of the metal, as the major component of the cathode material for the lithium secondary cell" is to be suspended, there can be cited an aqueous solution of lithium hydroxide, aqueous solution of sodium hydroxide, aqueous solution of potassium hydroxide, and so forth. A carbonate solution, for use in the same application, includes an aqueous solution of sodium carbonate, and aqueous solution of potassium carbonate, and forth while a hydrogencarbonate solution includes aqueous solution of sodium hydrogencarbonate, aqueous solution of potassium hydrogencarbonate, and so forth. Further, use can be made also of an aqueous solution of lithium hydrogencarbonate prepared by blowing carbon dioxide into an aqueous solution of lithium carbonate.

Then, a salt of dopant element refers to a salt of a dopant metal element, deemed effective for improvement of characteristics, and more specifically, includes sulfate, nitrate, and chloride, or organic salt, containing transition metals (Sc, Ti, V, Cr, Mn, Fe, Co, Ni, and Cu), alkaline metals (Li, Na, K, Rb, Cs, and Fr), alkaline earth metals (Be, Mg, Ca, Sr, Ba, and Ra), and B or Al.

With the invention, an aqueous solution of the salt of the other element is first dripped into a solution in which the compound of the metal, as the major component of the cathode material for the lithium secondary cell, is suspended, thereby causing a compound of the dopant element to be precipitated on the surface of the compound of the metal, as the major component, and at this point in time, a ratio of the metal in the compound of the metal, as the major component, to the dopant element is preferably rendered to be in a range of 99 : 1 to 40 : 60 in terms of a mole ratio, whereupon various performances can be stably obtained.

Further, a lithium compound to be mixed with the compound of the dopant element precipitated and bonded on the surface of the compound of the metal, as the major component, to be subsequently fired is preferably lithium carbonate, which is heavily used for production of the cathode material for the lithium secondary cell although not limited thereto, and the firing condition thereof may be the public known condition applied for production of the cathode material for the lithium secondary cell.

As described in the foregoing, when doping the cathode material for the lithium secondary cell with Co, Mn, and so forth, in order to improve the performance of the cell, a method according to the invention does not adopt a conventional "method of mixing powders of a compound of a dopant metal with powders of a cathode raw material, thereby preparing a mixture, and firing the mixture". With the method according to the invention, a compound of the major component, in powdery form, such as the manganese oxide in the case of the lithium-manganese oxide complex based cathode material, the cobalt oxide in the case of the lithium-cobalt oxide complex based cathode material, the nickel oxide in the case of the lithium-nickel oxide complex based cathode material, or so forth is first suspended in alkaline solution, carbonate solution or the hydrogencarbonate solution (for example, aqueous solution of sodium hydrogencarbonate), and an aqueous solution of a salt of a dopant metal (the other element), such as cobalt sulfate, manganese sulfate, and so forth, is dripped in the solution described. As a result of such processing, cobalt carbonate as the reaction product of the cobalt sulfate is precipitated and bonded on the surface of, for example, manganese oxide particles as a compound of the major component, thereby obtaining the manganese oxide particles uniformly covered with the cobalt carbonate.

Subsequently, the compound of the major component covered with the compound of the dopant element (the other element) is mixed with a lithium compound (lithium carbonate and so forth) before firing, whereupon there can be obtained a cathode material for a lithium secondary cell, doped with the dopant element, having very high doping uniformity with the minimum ununiformity in doping.

With a lithium secondary cell to which the cathode material for the lithium secondary cell, produced by the method according to the invention, is applied, there can be observed excellent initial capacity, cycle characteristics, and safety, capable of meeting severe requirements for enhancement in the cell performance of the lithium secondary cell.

The present invention is described hereinafter with reference to working examples.

### Working Example 1

As raw material of the major component of a cathode material for a lithium secondary cell, for production of the cathode material, use was made of manganese oxide 10 µm in average grain size, obtained by applying oxidation treatment to "manganese carbonate produced by blowing carbon dioxide into aqueous ammonia of metallic manganese in accordance with the method disclosed in JP - A 2000 - 281351 as previously described".

Subsequently, 1 kg of the manganese oxide described as above was suspended in 6 liter of aqueous solution of sodium hydrogencarbonate at 0.3 mol / l, and aqueous solution of cobalt sulfate at 0.22 mol / l was dripped in the former at a rate of 0.2 l / hr to undergo reaction at room temperature for predetermined time, and to be washed in water, thereby having obtained manganese oxide with the surface thereof, coated with cobalt carbonate.

With reference to the manganese oxide obtained after the above-described processing, it was confirmed by observation with an SEM (scanning electron microscope) and an EPMA (electron beam probe microanalyzer) that the surface of the manganese oxide was uniformly coated with the cobalt carbonate, and a mol ratio of Mn to Co was found at 95 : 5.

Subsequently, after mixing lithium carbonate with the "manganese oxide coated with the cobalt carbonate" such that a ratio of Li / (Mn + Co) comes to be at 0.53, a mixture obtained was fired at 750°C in the atmosphere for 10 hrs, thereby having obtained a lithium-manganese oxide complex (LiMn₂O₄) doped with 5% of Co (this is referred to as material for Working Example 1).

The material obtained was 10 µm in average grain size, 0.4 m² / g in specific surface area, and 2.1 g / cc in tap density Further, the material was found of high purity, containing not more than 500 ppm of an alkaline metal represented by Na, and not more than 1000 ppm of S.

Meanwhile, for the sake of comparison, commercially available cobalt oxide in fine powder form, and lithium carbonate powders were mixed with the same manganese oxide as that for use in Working Example 1 to be subsequently fired under the same condition as in the case of Example 1, thereby having obtained a lithium-manganese oxide complex of the same composition as that for Working example 1, doped with 5% of Co (this is referred to as material for Comparative Example 1).

Thereafter, slurries composed of 85% of the respective materials, 8% of acetylene black, and 7% of PVDF (poly(vinylidene fluoride) were prepared by use of NMP (N-methyl-2-pyrrolidone) as a solvent, and the slurries were applied to aluminum foils, respectively, to be dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined, and results of examinations are shown in Table 1.

As for the cycle characteristics, a capacity retention ratio after 100 cycles in operation at 55°C was examined.

Further as for the safety, an oxygen elimination temperature was examined by carrying out a differential thermal analysis (DSC) after electrochemically removing Li out of the cathode material. The oxygen elimination temperature refers to a temperature at which oxygen is eliminated when the temperature of the cathode material is kept rising, and needless to say, the higher the temperature, the higher the safety is.

**Table 1**

| Measurement Items | Measuring results of characteristics | |
|---|---|---|
| | the material for example 1 | the material for compa. Example 1 |
| Initial capacity | 120 mA h / g | 115 mAh / g |
| Cycle characteristics | 91% | 82% |
| safety | 360°C | 354°C |

As is evident from the results shown in Table 1, it is apparent that with the method according to the invention, it is possible to stably produce a lithium-manganese oxide complex based cathode material for a lithium secondary cell, excellent in respect of the initial capacity, cycle characteristics, and safety thereof.

### Example 2

First, lithium carbonate was dissolved in water to prepare aqueous solution thereof, and by blowing carbon dioxide in the former, 6 liter of aqueous solution of lithium hydrogencarbonate at 0.35 mol / l was prepared.

Subsequently, 1 kg of commercially available cobalt oxide (2.5 µm in average grain size, 2.9 m² / g in specific surface area, and 2.5 g / cc in tap density) was suspended in the aqueous solution of lithium hydrogencarbonate, and aqueous solution of manganese sulfate at 0.18 mol / 1 was dripped in the former at a rate of 0.2 l / hr to undergo reaction at room temperature for predetermined time, and to be subsequently washed in water, thereby having obtained cobalt oxide with the surface thereof, coated with manganese carbonate.

With reference to the cobalt oxide obtained after the above-described processing, it was confirmed by observation with the SEM (scanning electron microscope) and the EPMA (electron beam probe micro-analyzer) that the surface of the cobalt oxide was uniformly coated with the manganese carbonate, and a mol ratio of Co to Mn was found at 95 : 5.

Subsequently, after mixing lithium carbonate with the "cobalt oxide coated with manganese carbonate" such that a ratio of Li / (Mn + Co) comes to be at 1.00, a mixture obtained was fired at 850°C in the atmosphere for 10 hrs, thereby having obtained a lithium-cobalt oxide complex (LiCoO₂) doped with 5% of Mn (this is referred to as material for Working Example 2).

The material obtained was 6 µm in average grain size, 1.4 m² / g in specific surface area, and 2.2 g / cc in tap density Further, the material was found to contain 500 ppm of Ca, and 1500 ppm of S. which coincide with respective contents of impurities of commercially available cobalt oxide, indicating that there was no contamination occurring due to the reaction.

Meanwhile, for the sake of comparison, respective powders of commercially available cobalt oxide, manganese carbonate, and lithium carbonate were mixed with each other and subsequently fired under the same condition as in the case of Working Example 2, thereby having produced a lithium-cobalt oxide complex of the same composition as that for Working Example 2, doped with 5% of Mn (this is referred to as material for Comparative Example 2).

Thereafter, slurries composed of 85% of the respective materials, 8% of acetylene black, and 7% of PVDF (poly(vinylidene fluoride) were prepared by use of NMP (N-methyl-2-pyrrolidone) as a solvent, and the slurries were applied to aluminum foils, respectively, to be dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined, respectively, as with the case of Working Example 1, and results of examinations are shown in Table 2.

**Table 2**

| Measurement Items | Measuring results of characteristics | |
|---|---|---|
| | the material for example 2 | the material for compa. example 2 |
| Initial capacity | 145 mA h / g | 140 mA h / g |
| Cycle characteristics | 95% | 90% |
| safety | 230°C | 225°C |

As is also evident from the results shown in Table 2, it is apparent that with the method according to the invention, it is possible to stably produce a lithium-cobalt oxide complex based cathode material for a lithium secondary cell, excellent in respect of the initial capacity, cycle characteristics, and safety thereof.

### Example 3

First, lithium carbonate was dissolved in water to prepare aqueous solution thereof, and by blowing carbon dioxide in the former, 6 liter of aqueous solution of lithium hydrogencarbonate at 0.35 mol / 1 was prepared.

Subsequently, 1 kg of commercially available nickel oxide (6 µm in average grain size, 2.0 m² / g in specific surface area, and 2.4 g / cc in tap density) was suspended in the aqueous solution of lithium hydrogencarbonate, and aqueous solution of cobalt sulfate at 0.20 mol / l was dripped in the former at a rate of 0.2 l / hr to undergo reaction at room temperature for predetermined time, and to be subsequently washed in water, thereby having obtained nickel oxide with the surface thereof, coated with cobalt carbonate.

With reference to the nickel oxide obtained after the above-described processing, it was confirmed by observation with the SEM (scanning electron microscope) and the EPMA (electron beam probe micro-analyzer) that the surface of the nickel oxide was uniformly coated with the cobalt carbonate, and a mol ratio of Ni to Co was found at 80 : 20.

Subsequently, after mixing lithium carbonate with the "nickel oxide coated with the cobalt carbonate" such that a ratio of Li / (Ni + Co) comes to be at 1.00, a mixture obtained was fired at 750°C in the atmosphere for 10 hrs, thereby having obtained a lithium-nickel oxide complex (LiNiO₂) doped with 20% of Co (this is referred to as material for Working Example 3).

The material obtained was 8 µm in average grain size, 2.2 m² / g in specific surface area, and 2.1 g / cc in tap density

Meanwhile, for the sake of comparison, respective powders of commercially available nickel oxide, cobalt carbonate, and lithium carbonate were mixed with each other and subsequently fired under the same condition as in the case of Working Example 3, thereby having produced a lithium-nickel oxide complex of the same composition as that for Working Example 3, doped with 20% of Co (this is referred to as material for Comparative Example 3).

Thereafter, slurries composed of 85% of the respective materials, 8% of acetylene black, and 7% of PVDF (poly(vinylidene fluoride) were prepared by use of NMP (N-methyl-2-pyrrolidone) as a solvent, and the slurries were applied to aluminum foils, respectively, to be dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined, respectively, as with the case of Working Example 1, and results of examinations are shown in Table 3.

**Table 3**

| Measurement Items | Measuring results of characteristics | |
|---|---|---|
| | the material for example 3 | the material for compa. Example 3 |
| Initial capacity | 185 mA h / g | 180 mA h / g |
| Cycle characteristics | 85% | 80% |
| Safety | 230°C | 225°C |

As is also evident from the results shown in Table 3, it is apparent that with the method according to the invention, it is possible to stably produce a lithium-nickel oxide complex based cathode material for a lithium secondary cell, excellent in respect of the initial capacity, cycle characteristics, and safety thereof.

### Example 4

"Manganese oxide identical in powder property to the manganese oxide that was used in the case of Example 1" was used as raw material of the major component of a cathode material for a lithium secondary cell for production of the cathode material, and 1 kg thereof was suspended in 6 liter of aqueous solution of lithium hydrogencarbonate at 0.35 mol / l, obtained by blowing carbon dioxide in aqueous solution of lithium carbonate, prepared by dissolving lithium carbonate in water. Subsequently, aqueous solution of aluminum chloride at 0.20 mol / l was dripped in the former at a rate of 0.2 l / hr to undergo reaction similarly to the case of Example 1, thereby having obtained manganese oxide with the surface thereof, coated with aluminum hydroxide.

With reference to the manganese oxide obtained after the above-described processing, it was confirmed by observation with the SEM (scanning electron microscope) and the EPMA (electron beam probe microanalyzer) that the surface of the manganese oxide was uniformly coated with the aluminum hydroxide, and a mol ratio of Mn to Al was found at 90 : 10.

Subsequently, after mixing lithium carbonate with the "manganese oxide coated with the aluminum hydroxide" such that a ratio of Li / (Mn + Al) comes to be at 0.55, a mixture obtained was fired at 750°C in the atmosphere for 10 hrs, thereby having obtained a lithium-manganese oxide complex (LiMn₂O₄) doped with 10% of Al (this is referred to as material for Working Example 4).

The material obtained had powder property of 10 µm in average grain size, 0.8 m² / g in specific surface area, and 2.0 g / cc in tap density Meanwhile, for the sake of comparison, commercially available aluminum oxide in fine powder form, and lithium carbonate powders were mixed with the same manganese oxide that was used in Working Example 4 to be subsequently fired under the same condition as in the case of Working Example 4, thereby having produced a lithium-manganese oxide complex of the same composition as that for Working Example 4, doped with 10% of Al (this is referred to as material for Comparative Example 4).

Thereafter, slurries composed of 85% of the respective materials, 8% of acetylene black, and 7% of PVDF (poly(vinylidene fluoride) were prepared by use of NMP (N - methyl - 2 - pyrrolidone) as a solvent, and the slurries were applied to aluminum foils, respectively, to be dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined, respectively, as with the case of Working Example 1, and results of examinations are shown in Table 4.

**Table 4**

| Measurement Items | Measuring results of characteristics | |
|---|---|---|
| | the material for example 4 | the material for compa. Example 4 |
| Initial capacity | 110 mA h / g | 108 mA h / g |
| Cycle characteristics | 96% | 93% |
| Safety | 365°C | 358°C |

As is also evident from the results shown in Table 4, it is apparent that with the method according to the invention, it is possible to stably produce a lithium-manganese oxide complex based cathode material for a lithium secondary cell, excellent in respect of the initial capacity, cycle characteristics, and safety thereof.

### Example 5

First, lithium carbonate was dissolved in water to prepare aqueous solution thereof, and by blowing carbon dioxide in the former, 6 liter of aqueous solution of lithium hydrogencarbonate at 0.35 mol / l was prepared.

Subsequently, 1 kg of commercially available cobalt oxide identical in powder property to the cobalt oxide that was used in the case of Example 2, was suspended in the aqueous solution of lithium hydrogencarbonate, and aqueous solution of aluminum chloride at 0.20 mol / l was dripped in the former at a rate of 0.2 l / hr to undergo reaction at room temperature for predetermined time, thereby having obtained cobalt oxide with the surface thereof, coated with aluminum hydroxide.

With reference to the cobalt oxide obtained after the above-described processing, it was confirmed by observation with the SEM (scanning electron microscope) and the EPMA (electron beam probe microanalyzer) that the surface of the cobalt oxide was uniformly coated with the aluminum hydroxide, and a mol ratio of Co to Al was found at 95 : 5.

Subsequently, after mixing lithium carbonate with the "cobalt oxide coated with the aluminum hydroxide" such that a ratio of Li / (Co + Al) comes to be at 1.00, a mixture obtained was fired at 850°C in the atmosphere for 10 hrs, thereby having obtained a lithium-cobalt oxide complex (LiCoQ₂) doped with 5% of Al (this is referred to as material for Working Example 5).

The material obtained had powder property of 5 µm in average grain size, 1.5 m² / g in specific surface area, and 2.2 g / cc in tap density.

Meanwhile, for the sake of comparison, respective powders of commercially available cobalt oxide, aluminum oxide, and lithium carbonate were mixed with each other, and subsequently fired under the same condition as in the case of Working Example 5, thereby having produced a lithium-cobalt oxide complex of the same composition as that for Working Example 5, doped with 5% of Al (this is referred to as material for Comparative Example 5).

Thereafter, slurries composed of 85% of the respective materials, 8% of acetylene black, and 7% of PVDF (poly(vinylidene fluoride) were prepared by use of NMP (N - methyl - 2 - pyrrolidone) as a solvent, and the slurries were applied to aluminum foils, respectively, to be subsequently dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined, respectively, as with the case of Working Example 1, and results of examinations are shown in Table 5.

**Table 5**

| Measurement Items | Measuring results of characteristics | |
|---|---|---|
| | the material for example 5 | the material for compa. example 5 |
| Initial capacity | 143 mA h / g | 138 mA h / g |
| Cycle characteristics | 93% | 90% |
| safety | 228°C | 225°C |

As is also evident from the results shown in Table 5, it is apparent that with the method according to the invention, it is possible to stably produce a lithium-cobalt oxide complex based cathode material for a lithium secondary cell, excellent in respect of the initial capacity, cycle characteristics, and safety thereof.

### Example 6

First, lithium carbonate was dissolved in water to prepare aqueous solution thereof, and by blowing carbon dioxide in the former, 6 liter of aqueous solution of lithium hydrogencarbonate at 0.35 mol / l was prepared.

Subsequently, 1 kg of the same commercially available nickel oxide that was used in the case of Example 3 was suspended in the aqueous solution of lithium hydrogencarbonate, and aqueous solution of manganese sulfate, and cobalt sulfate, at 0.20 mol / l, respectively, was dripped in the former at a rate of 0.21 / hr to undergo reaction at room temperature for predetermined time, thereby having obtained nickel oxide with the surface thereof, coated with manganese carbonate, and cobalt carbonate.

With reference to the nickel oxide obtained after the above-described processing, it was confirmed by observation with the SEM (scanning electron microscope) and the EPMA (electron beam probe micro-analyzer) that the surface of the nickel oxide was uniformly coated with carbonates of respective metals, and a mol ratio of Ni: Co : Mn was found at 60 : 20 : 20.

Subsequently, after mixing lithium carbonate with the "nickel oxide coated with the carbonates of the respective metals" such that a ratio of Li / (Ni + Co + Mn) comes to be at 1.10, a mixture obtained was fired at 850°C in the atmosphere for 10 hrs, thereby having obtained a lithium-nickel oxide complex (LiNiO₂) doped with Co and Mn (this is referred to as material for Working Example 6).

The material obtained was 6 µm in average grain size, 1.4 m² / g in specific surface area, and 2.0 g / cc in tap density

Meanwhile, for the sake of comparison, respective powders of commercially available nickel oxide, manganese carbonate, cobalt carbonate, and lithium carbonate were mixed with each other and subsequently fired under the same condition as that for Working Example 6, thereby having produced a lithium-nickel oxide complex of the same composition as that for Working Example 6, doped with Co and Mn (this is referred to as material for Comparative Example 6).

Thereafter, slurries composed of 85% of the respective materials, 8% of acetylene black, and 7% of PVDF (poly(vinylidene fluoride) were prepared by use of NMP (N - methyl - 2 - pyrrolidone) as a solvent, and the slurries were applied to aluminum foils, respectively, to be dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined, respectively, as with the case of Working Example 1, and results of examinations are shown in Table 6.

**Table 6**

| Measurement Items | Measuring results of characteristics | |
|---|---|---|
| | the material for example 6 | the material for compa. example 6 |
| Initial capacity | 170 mA h / g | 165 mA h / g |
| Cycle characteristics | 85% | 78% |
| Safety | 260°C | 255°C |

As is also evident from the results shown in Table 6, it is apparent that with the method according to the invention, it is possible to stably produce a lithium-nickel oxide complex based cathode material for a lithium secondary cell, excellent in respect of the initial capacity, cycle characteristics, and safety thereof.

### Example 7

"Manganese carbonate produced by blowing carbon dioxide into aqueous ammonia of metallic manganese in accordance with the method disclosed in JP - A 2000 - 281351 as previously described" was used as raw material of the major component of a cathode material for a lithium secondary cell, for production of the cathode material

Subsequently, 1 kg of the manganese carbonate described as above was suspended in 6 liter of aqueous solution of lithium hydrogencarbonate at 0.3 mol / l, and aqueous solution of nickel chloride at 0.22 mol / l was dripped in the former at a rate of 0.21 / hr, thereby having obtained manganese carbonate with the surface thereof, coated with nickel carbonate.

With reference to the manganese carbonate obtained after the above-described processing, it was confirmed by observation with the SEM (scanning electron microscope) and the EPMA (electron beam probe microanalyzer) that the surface of the manganese carbonate was uniformly coated with the nickel carbonate, and a mol ratio of Mn to Ni was found at 49 : 51.

Subsequently, after mixing lithium carbonate with the "manganese carbonate coated with the nickel carbonate" such that a ratio of Li / (Mn + Ni) comes to be at 1.00, a mixture obtained was fired at 900°C in the atmosphere for 10 hrs, thereby having obtained a lithium-manganese-nickel oxide complex (this is referred to as material for Working Example 7).

The material obtained was 8 µm in average grain size, 1.4 m² / g in specific surface area, and 2.1 g / cc in tap density

Meanwhile, for the sake of comparison, respective powders of nickel carbonate, and lithium carbonate were mixed with powders of the same manganese carbonate that were used in the case of Working Example 7 to be subsequently fired under the same condition as in the case of Working Example 7, thereby having obtained a lithium-manganese-nickel oxide complex of the same composition as that for Working Example 7 (this is referred to as material for Comparative Example 7).

Thereafter, slurries composed of 85% of the respective materials, 8% of acetylene black, and 7% of PVDF (poly(vinylidene fluoride) were prepared by use of NMP (N - methyl - 2 - pyrrolidone) as a solvent, and the slurries were applied to aluminum foils, respectively, to be dried before press forming, thereby having obtained cathode samples for evaluation of respective lithium secondary cells.

The respective lithium secondary cells for use in the evaluation were coin-cell models of 2032 type wherein the respective cathode samples were used for the respective cathodes thereof while a lithium foil was used for the respective opposite electrodes thereof, and for the respective electrolytes thereof, use was made of a solvent where a ratio of EC (ethylene carbonate) / DMC (dimethyl crbonate) was at 1 : 1, in which LiPF₆ at 1 mol was dissolved.

Using the respective lithium secondary cells for the evaluation, the initial capacity, cycle characteristics, and safety thereof were examined as with the case of Example 1, and results of examinations are shown in Table 7.

**Table 7**

| Measurement Items | Measuring results of characteristics | |
|---|---|---|
| | the material for example 7 | the material for compa. example 7 |
| Initial capacity | 160 mA h / g | 155 mA h / g |
| Cycle characteristics | 80% | 76% |
| Safety | 280°C | 274°C |

As is also evident from the results shown in Table 7, it is apparent that with the method according to the invention, it is possible to stably produce a lithium-manganese-nickel oxide complex based cathode material for a lithium secondary cell, excellent in respect of the initial capacity, cycle characteristics, and safety thereof.

### INDUSTRIAL APPLICABILITY

The invention can provide a cathode material for a lithium secondary cell, with which it is possible to manufacture a lithium secondary cell, excellent in initial capacity, cycle characteristics, and safety.

## Claims

1. A method of producing a cathode material for a lithium secondary cell, comprising the steps of preparing a solution selected from the group consisting of an alkaline solution, a carbonate solution, and a hydrogencarbonate solution, with a compound of a metal selected from a metal carbonate, a metal hydroxide and a metal oxide, as the major component of a cathode material for a lithium secondary cell, suspended therein, dripping an aqueous solution of a salt of a dopant element into the solution, precipitating a compound of the dopant element on the surface of the compound of the metal, as the major component, subsequently preparing a mixture by mixing the compound of the metal, as the major component, with the compound of the dopant element, precipitated and bonded thereon, with a lithium compound, and firing the mixture.

2. A method of producing a cathode material for a lithium secondary cell, according to Claim 1, wherein the metal in the compound of the metal, as the major component, is an element selected from the group consisting of elements Co, Mn, and Ni.

3. A method of producing a cathode material for a lithium secondary cell, according to Claim 1 or 2, wherein the dopant element is at least one element selected from the group consisting of transition metals (Sc, Ti, V, Cr, Mn, Fe, Co, Ni, and Cu), alkaline metals (Li, Na, K, Rb, Cs, and Fr), alkaline earth metals (Be, Mg, Ca, Sr, Ba, and Ra), B, and Al.

4. A method of producing a cathode material for a lithium secondary cell, according to any of Claims 1 to 3, wherein a ratio of the metal in the compound of the metal, as the major component, to the dopant element is in a range of 99 : 1 to 40 : 60 in terms of a mole ratio.

5. A method of producing a cathode material for a lithium secondary cell, according to Claim 1 or 4, wherein the metal in the compound of the metal, as the major component, is an element Mn, and the dopant element is at least one element selected from the group consisting of Co, Ni, Al, Mg, and Ti).

6. A method of producing a cathode material for a lithium secondary cell, according to Claim 1 or 4, wherein the metal in the compound of the metal, as the major component, is an element Co, and the dopant element is at least one element selected from the group consisting of Mn, Ni, Al, Mg, and Ti).

7. A method of producing a cathode material for a lithium secondary cell, according to Claim 1 or 4, wherein the metal in the compound of the metal, as the major component, is an element Ni, and the dopant element is at least one element selected from the group consisting of Co, Mn, Al, Mg, and Ti).

## Patentansprüche

1. Verfahren zum Herstellen eines Kathodenmaterials für eine Lithiumsekundärzelle, umfassend die Schritte eines Herstellens einer Lösung ausgewählt aus der Gruppe bestehend aus einer Alkalilösung, einer Carbonatlösung und einer Hydrogencarbonatlösung, mit einer Verbindung eines Metalls, ausgewählt aus einem Metallcarbonat, einem Metallhydroxid und einem Metalloxid, als den Hauptbestandteil eines Kathodenmaterials für eine Lithiumsekundärbatterie, darin suspendiert, eines Tropfens einer wässrigen Lösung eines Salzes eines Dotierelements in die Lösung, eines Ausfällens einer Verbindung des Dotierelements auf der Oberfläche der Verbindung des Metalls, als die Hauptkomponente, eines anschließenden Herstellens einer Mischung durch Mischen der Verbindung des Metalls, als die Hauptkomponente, mit der Verbindung des Dotierelements, ausgefällt und daran gebunden, mit einer Lithiumverbindung, und Brennen der Mischung.

2. Verfahren zum Herstellen eines Kathodenmaterials für eine Lithiumsekundärzelle nach Anspruch 1, wobei das Metall in der Verbindung des Metalls, als die Hauptkomponente, ein Element ist, ausgewählt aus der Gruppe bestehend aus Elementen von Co, Mn und Ni.

3. Verfahren zum Herstellen eines Kathodenmaterials für eine Lithiumsekundärzelle nach Anspruch 1 oder 2, wobei das Dotierelement wenigstens ein Element ist, ausgewählt aus der Gruppe bestehend aus Übergangsmetallen (Sc, Ti, V, Cr, Mn, Fe, Co, Ni und Cu), Alkalimetallen (Li, Na, K, Rb, Cs und Fr), Erdalkalimetallen (Be, Mg, Ca, Sr, Ba und Ra), B und Al.

4. Verfahren zum Herstellen eines Kathodenmaterials für eine Lithiumsekundärzelle nach einem der Ansprüche 1 bis 3, wobei ein Verhältnis des Metalls in der Verbindung des Metalls, als die Hauptkomponente, zum Dotierelement in einem Bereich von 99 : 1 bis 40 : 60 in Bezug auf ein Molverhältnis ist.

5. Verfahren zum Herstellen eines Kathodenmaterials für eine Lithiumsekundärzelle nach Anspruch 1 oder 4, wobei das Metall in der Verbindung des Metalls, als die Hauptkomponente, ein Element Mn ist, und das Dotierelement wenigstens ein Element ist, ausgewählt aus der Gruppe bestehend aus Co, Ni, Al, Mg und Ti.

6. Verfahren zum Herstellen eines Kathodenmaterials für eine Lithiumsekundärzelle nach Anspruch 1 oder 4, wobei das Metall in der Verbindung des Metalls, als die Hauptkomponente, ein Element Co ist, und das Dotierelement wenigstens ein Element ist, ausgewählt aus der Gruppe bestehend aus Mn, Ni, Al, Mg und Ti.

7. Verfahren zum Herstellen eines Kathodenmaterials für eine Lithiumsekundärzelle nach Anspruch 1 oder 4, wobei das Metall in der Verbindung des Metalls, als die Hauptkomponente, ein Element Ni ist, und das Dotierelement wenigstens ein Element ist, ausgewählt aus der Gruppe bestehend aus Co, Mn, Al, Mg und Ti.

## Revendications

1. Procédé de production d'un matériau cathodique pour batterie secondaire au lithium, comportant les étapes qui consistent à préparer une solution sélectionnée dans le groupe comprenant une solution alcaline, une solution de carbonate, et une solution d'hydrogène carbonate, avec le composé d'un métal sélectionné parmi un carbonate métallique, un hydroxyde métallique et un oxyde de métal en tant que composant principal pour matériau cathodique destiné à une batterie secondaire au lithium, suspendu à l'intérieur, et faisant égoutter une solution aqueuse du sel d'un élément dopant dans la solution, précipitant un composé de l'élément dopant à la surface du composé métallique, en tant que composant principal, et préparant par la suite un mélange en mélangeant le composé métallique, qui constitue le composé majeur, au composé de l'élément dopant, précipité et collé sur lui, à un composé de lithium, puis en enflammant le mélange.

2. Procédé de production d'un matériau cathodique pour batterie secondaire au lithium, selon la revendication 1, **caractérisé en ce que** le métal dans le composé métallique, qui constitue le composé majeur, est un élément sélectionné dans le groupe composé des éléments Co, Mn et Ni.

3. Procédé de production d'un matériau cathodique pour batterie secondaire au lithium, selon la revendication 1 ou 2, **caractérisé en ce que** l'élément dopant est au moins un élément sélectionné dans le groupe composé des métaux de transition (Sc, Ti, V, Cr, Mn, Fe, Co, Ni et Cu), des métaux alcalins (Li, Na, K, Rb, Cs et Fr), des métaux alcalino-terreux (Be, Mg, Ca, Sr, Ba et Ra), du B et de l'Al.

4. Procédé de production d'un matériau cathodique pour batterie secondaire au lithium, selon la revendication 1 à 3, **caractérisé en ce que** le rapport entre le métal dans le composé métallique, qui représente le composant majeur, et l'élément dopant est compris entre 99 : 1 et 40 : 60 en termes d'un rapport molaire.

5. Procédé de production d'un matériau cathodique pour batterie secondaire au lithium, selon la revendication 1 ou 4, **caractérisé en ce que** le métal dans le composé métallique qui représente le composant majeur, est un élément Mn, et l'élément dopant est au moins l'un des éléments sélectionnés dans le groupe composé de Co, de Ni, de Al, de Mg et de Ti).

6. Procédé de production d'un matériau cathodique pour batterie secondaire au lithium, selon la revendication 1 ou 4, **caractérisé en ce que** le métal dans le composé métallique qui représente le composant majeur, est un élément Co, et l'élément dopant est au moins l'un des éléments sélectionnés dans le groupe composé de Mn, de Ni, de Al, de Mg et de Ti).

7. Procédé de production d'un matériau cathodique pour batterie secondaire au lithium, selon la revendication 1 ou 4, **caractérisé en ce que** le métal dans le composé métallique qui représente le composant majeur, est un élément Ni, et l'élément dopant est au moins l'un des éléments sélectionnés dans le groupe composé de Co, de Mn, de Al, de Mg et de Ti).
